# EUROPÄISCHE PATENTSCHRIFT

(11) **EP 3 459 828 B1**
(45) Veröffentlichungstag und Bekanntmachung des Hinweises auf die Patenterteilung: **11.11.2020**
(21) Anmeldenummer: 18194071.9
(22) Anmeldetag: 12.09.2018
(51) Int. Cl.: B62D 21/15, B62D 21/11, B60K 1/00, B60K 1/04

(54) **VORRICHTUNG ZUR ÜBERTRAGUNG VON KRÄFTEN IM CRASHFALL EINES KRAFTFAHRZEUGS**
DEVICE FOR THE TRANSMISSION OF FORCES IN THE EVENT OF A CRASH OF A MOTOR VEHICLE
DISPOSITIF DE TRANSFERT DE FORCES LORS DE LA COLLISION D'UN VÉHICULE AUTOMOBILE

(30) Priorität: 21.09.2017 DE 102017008883
(43) Veröffentlichungstag der Anmeldung: 27.03.2019
(73) Patentinhaber: AUDI AG, 85045 Ingolstadt (DE)
(72) Erfinder: Schmalzrieth, Sven, 85055 Ingolstadt (DE)

(56) Entgegenhaltungen:
- DE-A1- 10 229 161
- DE-A1-102010 033 123
- DE-B3-102015 013 533

## Beschreibung

Die Erfindung betrifft eine Vorrichtung zur Übertragung von Kräften im Crashfall eines Kraftfahrzeugs, mit einem Übertragungselement.

Bereits seit vielen Jahren wird versucht, Kraftfahrzeuge so zu konstruieren, dass im Crashfall, also beispielsweise bei einem Front-, Seiten- oder Heckaufprall, die Beschädigung des Kraftfahrzeugs so gering wie möglich gehalten wird. Während bei üblichen, von Verbrennungsmotoren angetriebenen Kraftfahrzeugen verschiedene, teilweise sehr gut arbeitende Systeme eingesetzt werden, kommt es bei Hybrid- oder Elektrofahrzeugen zu zusätzlichen Schwierigkeiten aufgrund der verhältnismäßig großen Traktionsbatterie und des meist in der Nähe der Traktionsbatterie angeordneten Elektromotors. Um größere Beschädigungen des Kraftfahrzeugs zu verhindern, sollte ein Kontakt des Elektromotors oder anderer crashrelevanter Bauteile, wie zum Beispiel anderer Aggregate, mit der Traktionsbatterie vermieden werden. Häufig ist der Elektromotor jedoch so platziert, dass er im Crashfall von einer Kraft beaufschlagt und, je nach Aufprallrichtung, zu der Traktionsbatterie hin bewegt wird, was zu Beschädigungen der Traktionsbatterie führen kann.

Die DE 10 2010 033 123 A1 beschreibt eine Anordnung einer Energiespeichereinrichtung an einem Rohbau eines Kraftfahrzeugs sowie ein Verfahren zum Schützen einer solchen Energiespeichereinrichtung. Dabei ist ein Betätigungselement vorgesehen, das am Rohbau des Kraftfahrzeugs angebracht ist und durch dessen Betätigung die Energiespeichereinrichtung bei einer unfallbedingten Kollision aus seiner Lage heraus verschiebbar ist. Das Betätigungselement wird durch eine Druckbetätigung, also beispielsweise eine Treibladung, aktiviert.

Der Nachteil dieser Lösung ist jedoch zum einen der vergleichsweise große Bauraumbedarf sowie die hohen Kosten, die bei der Verwendung einer Treibladung in Kraftfahrzeugen entstehen.

In der DE 10 2013 008 428 A1 ist eine Anordnung zur Lagerung eines Energiespeicherelements in einem Kraftfahrzeug bekannt. Dabei sind zwischen der Karosserie und dem Gehäuse des Energiespeicherelements zwei Deformationselemente angeordnet, wobei die Kraft-Weg-Kennung der Deformationselemente unterschiedlich ist. Dies soll zu einer Verlagerung des Gehäuses des Energiespeicherelements bei der Stauchung der Deformationselemente führen.

Auch diese Lösung erfordert einen relativ hohen Bauraumbedarf, der bei Kraftfahrzeugen gerade in diesem Bereich selten vorhanden ist.

Der hohe Bauraumbedarf der beiden Lösungen führt außerdem zwangsweise zu einer Verkleinerung des Energiespeicherelements, was wiederum die Reichweite des Kraftfahrzeugs verringert.

Eine gattungsgemäße Vorrichtung ist aus der DE 10 2015 013 533 B3 bekannt.

Es ist daher Aufgabe der vorliegenden Erfindung, eine Vorrichtung zur Übertragung von Kräften im Crashfall eines Kraftfahrzeugs sowie ein Kraftfahrzeug mit einer solchen Vorrichtung zu schaffen, die in der Lage ist, die Bewegung eines Aggregats im Crashfall zu hemmen und dabei einen vergleichsweise geringen Bauraumbedarf aufweist.

Erfindungsgemäß wird diese Aufgabe durch die in Anspruch 1 genannten Merkmale gelöst.

Die erfindungsgemäße Vorrichtung erreicht mit einer rein mechanisch ausgebildeten und die im Crashfall auftretenden Kräfte ausnutzenden Lösung zumindest eine Hemmung der Bewegung des Aggregats. Dabei weist die Vorrichtung nicht nur eine sehr einfache Konstruktion auf und erfordert einen geringen Bauraum, sondern kann auch vergleichsweise kostengünstig ausgeführt werden.

Hierbei wird durch die Anordnung des Übertragungselements derart, dass es im Crashfall von der Gelenkwelle beaufschlagt wird, eine sehr zuverlässige Betätigung des Übertragungselements bewirkt. Der Vorteil der Verwendung einer Gelenkwelle zur Beaufschlagung des Übertragungselements besteht darin, dass es sich hierbei um ein gut zugängliches Bauteil handelt, das im Fahrbetrieb im Wesentlichen lediglich eine vertikale Bewegung ausführt, so dass das Übertragungselement relativ nah an der Gelenkwelle platziert werden kann und eine sichere Beaufschlagung des Übertragungselements gewährleistet ist. Die Gelenkwelle ist für den genannten Zweck auch sehr gut geeignet, da sie außer ihrer Bewegung in der vertikalen Richtung annähernd keine Bewegung in Fahrtrichtung und keine Bewegung in Fahrzeugquerrichtung macht. Dadurch ist ein Kontakt zwischen der Gelenkwelle und dem Übertragungselement im normalen Fahrbetrieb ausgeschlossen.

Aufgrund seines großen Durchmessers erfährt das Rad, mit dem die Gelenkwelle verbunden ist, beispielsweise im Falle eines Heckaufpralls eine Bewegung nach vorne, die zu einer sehr frühen Beaufschlagung der Gelenkwelle führt. Dadurch wird das Übertragungselement ebenfalls sehr früh beaufschlagt und kann noch auf das Aggregat einwirken bevor dieses größere Schäden erzeugen kann.

Dadurch, dass das Übertragungselement so angeordnet ist, dass es auf ein Kraftaufnahmeelement wirkt, das die Bewegung des Aggregats hemmt, wird durch das Kraftaufnahmeelement ein Teil der im Crashfall auftretenden Energie aufgenommen bzw. umgewandelt und es wird durch diese Verformung des Kraftaufnahmeelements eine zusätzliche Hemmung der Bewegung des Aggregats erreicht.

In einer weiteren vorteilhaften Ausgestaltung der Erfindung kann vorgesehen sein, dass das Kraftaufnahmeelement so ausgebildet ist, dass es durch Einwirken des Übertragungselements seine Erstreckung in Richtung des Aggregats erhöht. Durch die Vergrößerung des Kraftaufnahmeelements in Richtung des Aggregats wird ein zusätzliches Verzögern desselben erreicht und die Wahrscheinlichkeit, dass das Aggregat auf andere Bauteile, wie zum Beispiel eine Energiespeichereinrichtung, trifft, wird wesentlich verringert.

Eine sehr zuverlässige Beaufschlagung des Kraftaufnahmeelements durch das Übertragungselement und dadurch eine zuverlässigere Wirkungsweise der erfindungsgemäßen Vorrichtung ergibt sich, wenn das Übertragungselement fest mit dem Kraftaufnahmeelement verbunden ist.

Eine alternative Lösung der Aufgabe ergibt sich aus Anspruch 4.

Dabei ist das Übertragungselement so angeordnet, dass es bei seiner Rotation entgegen einer im Crashfall auf das Aggregat wirkenden Kraft wirkt. Dadurch kann auf ein Kraftaufnahmeelement verzichtet werden, was den Bauraumbedarf der erfindungsgemäßen Vorrichtung noch weiter verringert, und es wird dennoch eine Hemmung der Bewegung des Aggregats erreicht, indem ein Gegenimpuls gegen die auf das Aggregat wirkende Kraft aufgebracht wird.

Eine sehr einfache Lagerung des Übertragungselements ergibt sich, wenn das Übertragungselement drehbar an einem Achsträger gelagert ist.

Des Weiteren kann vorgesehen sein, dass das Übertragungselement einen in vertikaler Richtung verlaufenden Vorsprung aufweist. Dadurch wird sichergestellt, dass das Übertragungselement in den unterschiedlichsten Fahrzuständen des mit der erfindungsgemäßen Vorrichtung ausgestatteten Kraftfahrzeugs durch die Gelenkwelle beaufschlagt wird.

Wenn das Aggregat ein Elektromotor ist, so ist eine besondere Relevanz der erfindungsgemäßen Vorrichtung gegeben, da gerade Elektromotoren mit ihrer teilweise sehr hohen Masse im Crashfall eine Gefährdung für andere Bauteile, beispielsweise für Energiespeichereinrichtungen, spielen können. Grundsätzlich ist die erfindungsgemäße Lösung jedoch auch bei einem Verbrennungsmotor, einem Differentialgetriebe oder einem anderen Aggregat einsetzbar, das im Crashfall so beschleunigt wird, dass diese Beschleunigung gehemmt werden sollte.

Ein Kraftfahrzeug mit jeweiligen, auf beiden Seiten desselben angeordneten erfindungsgemäßen Vorrichtungen ergibt sich aus Anspruch 8.

Weitere Vorteile, Merkmale und Einzelheiten der Erfindung ergeben sich aus den Ansprüchen, der nachfolgenden Beschreibung bevorzugter Ausführungsformen sowie anhand der Zeichnungen. Dabei zeigen:
- Fig. 1: eine perspektivische Ansicht einer ersten Ausführungsform der erfindungsgemäßen Vorrichtung;
- Fig. 2: eine vergrößerte Darstellung von Fig. 1;
- Fig. 3: eine Draufsicht auf die Vorrichtung gemäß Fig. 1;
- Fig. 4: eine Ansicht der Vorrichtung gemäß Fig. 1 von unten;
- Fig. 5: eine weitere perspektivische Ansicht der Vorrichtung aus Fig. 1;
- Fig. 6: eine weitere perspektivische Ansicht der Vorrichtung aus Fig. 1;
- Fig. 7: eine perspektivische Ansicht einer zweiten Ausführungsform der erfindungsgemäßen Vorrichtung; und
- Fig. 8: eine weitere perspektivische Ansicht der Vorrichtung aus Fig. 7.

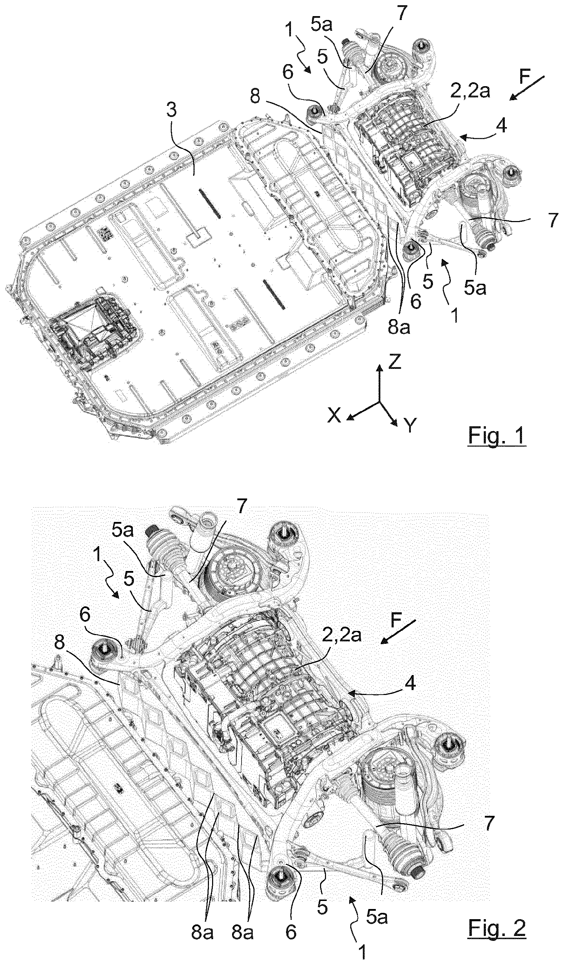

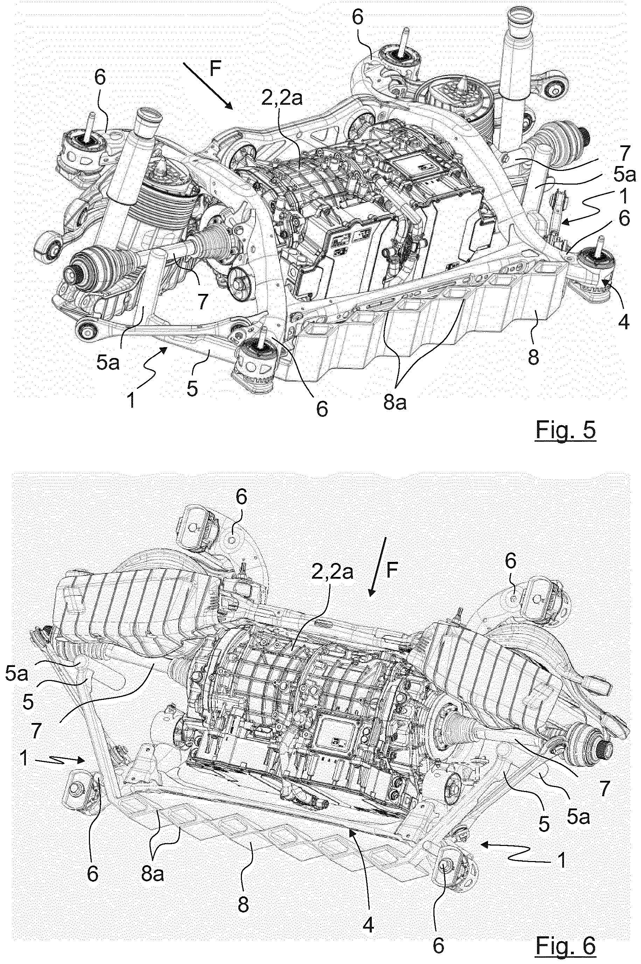

Fig. 1 zeigt eine Vorrichtung 1 zur Übertragung von Kräften im Crashfall eines in seiner Gesamtheit nicht dargestellten Kraftfahrzeugs. Die Figuren 1 bis 8 zeigen den Bereich einer Hinterachse des Kraftfahrzeugs, es wäre jedoch auch möglich, die Vorrichtung 1 bei einer Vorderachse oder in einem anderen Bereich des Kraftfahrzeugs einzusetzen.

Neben der Vorrichtung 1, die nachfolgend anhand ihrer einzelnen Bauteile und deren Wirkungsweise ausführlich beschrieben wird, sind in Fig. 1 außerdem ein Aggregat 2, das im vorliegenden Fall als Elektromotor 2a ausgebildet ist, ein als Traktionsbatterie 3 ausgebildetes Energiespeicherelement sowie ein zu einer Karosserie des Kraftfahrzeugs gehörender und demnach ein Karosserieteil bildender Achsträger 4, in dem im vorliegenden Fall der Elektromotor 2a aufgenommen ist, dargestellt. Der Elektromotor 2a dient in an sich bekannter Weise zum Antrieb des in diesem Fall als Elektro- oder Hybridfahrzeug ausgebildeten Kraftfahrzeugs und die Traktionsbatterie 3 dient in ebenfalls bekannter Weise zur Versorgung des Elektromotors 2a mit elektrischem Strom.

Die Vorrichtung 1, die auf beiden Seiten des Kraftfahrzeugs vorgesehen ist, weist ein Übertragungselement 5 auf, das drehbar gelagert ist. Da die beiden Vorrichtungen 1 auf den beiden Seiten des Kraftfahrzeugs im Prinzip identisch bzw. spiegelbildlich zueinander ausgebildet sind, wird nachfolgend lediglich eine der beiden Vorrichtungen 1 beschrieben.

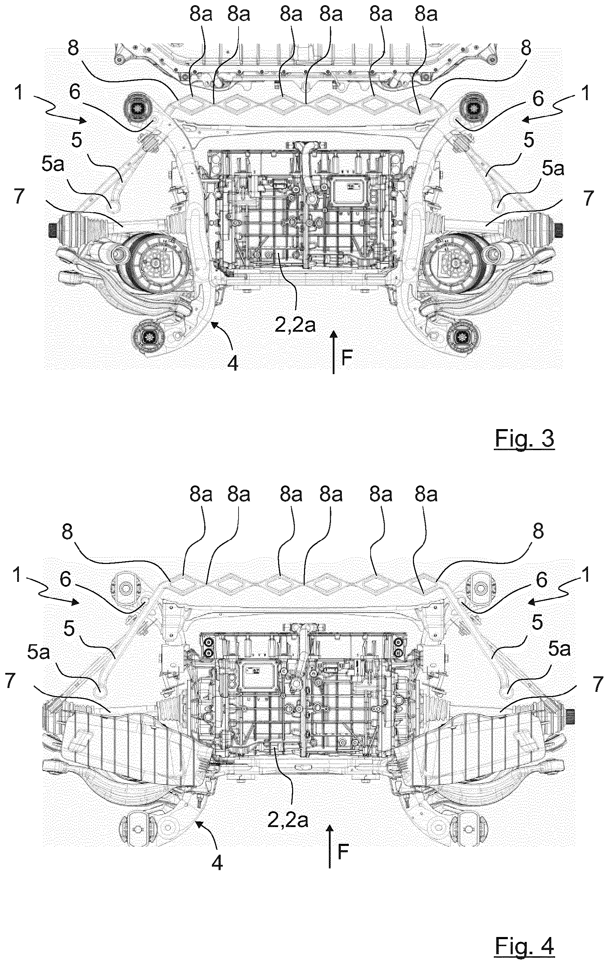

Das Übertragungselement 5 ist im vorliegenden Fall um eine Drehachse 6 drehbar an dem Achsträger 4 gelagert. Dies ist insbesondere in der Darstellung von Fig. 4 zu erkennen. Grundsätzlich wäre es jedoch auch möglich, das Übertragungselement 5 an einem andern Bauteil drehbar zu lagern. Die drehbare Lagerung des Übertragungselements 5 sollte so ausgeführt sein, dass eine ungewollte Drehung desselben vermieden wird.

Das Übertragungselement 5 ist derart gegenüber einer Gelenkwelle 7, die zu einem Fahrwerk des Kraftfahrzeugs gehört, angeordnet, dass es im Crashfall von der Gelenkwelle 7 beaufschlagt und rotiert wird. Die Gelenkwelle 7 kann auch als Antriebswelle bezeichnet werden. Des Weiteren ist das Übertragungselement 5 so angeordnet bzw. ausgebildet, dass es bei seiner Rotation eine durch einen Crash, im vorliegenden Fall einen Heckaufprall, hervorgerufene Bewegung des Aggregats 2, im vorliegenden Fall also des Elektromotors 2a, hemmt. Die durch den Heckaufprall auf das Aggregat 2 einwirkende Kraft ist in den Figuren mit "F" bezeichnet.

Bei der in den Figuren 1 bis 6 dargestellten Ausführungsform der Vorrichtung 1 wird dieses Hemmen der Bewegung des Aggregats 2 mittels des Übertragungselements 5 dadurch realisiert, dass das Übertragungselement 5 auf ein Kraftaufnahmeelement 8 wirkt, das die Bewegung des Aggregats 2 zumindest hemmt, gegebenenfalls vollkommen unterbindet. Das Kraftaufnahmeelement 8, das zwischen dem Aggregat 2 und der Traktionsbatterie 3 angeordnet ist, ist im vorliegenden Fall so ausgeführt, dass es durch Einwirken des Übertragungselements 5 seine Erstreckung in Richtung des Aggregats 2 erhöht. Im dargestellten Ausführungsbeispiel weist das Kraftaufnahmeelement 8 mehrere Sollknickstellen 8a auf, die die gewünschte Umformung des Kraftaufnahmeelements 8 erzeugen, um auf diese Weise seine Erstreckung in der mit "x" bezeichneten Fahrzeuglängsrichtung, in der auch die Kraft F wirkt, zu vergrößern. Die Sollknickstellen 8a wirken in diesem Fall wie Gelenke, die die gewünschte Deformierung des Kraftaufnahmeelements 8 bewirken. Durch die Vergrößerung des Querschnitts des Kraftaufnahmeelements 8 in der entgegengesetzten Richtung zu der Richtung, in der die durch den Crash hervorgerufene Kraft F einwirkt, wird eine größere Energiemenge abgebaut. Durch die Verformung wird dabei nicht nur Energie abgebaut, sondern auch der Abstand zwischen dem Elektromotor 2a und der Traktionsbatterie 3 im Wesentlichen gleich groß gehalten.

Im dargestellten Ausführungsbeispiel ist das Kraftaufnahmeelement 8 aus mehreren Rauten zusammengesetzt, die sich bei einer Beaufschlagung durch das Übertragungselement 5 derart verformen, dass ihre Länge in der Fahrzeuglängsrichtung x nach dem Crash größer ist als vor dem Aufprall. Selbstverständlich könnte das Kraftaufnahmeelement 8 auch einen anderen Querschnitt aufweisen. Hierbei ist es besonders zu bevorzugen, wenn das Kraftaufnahmeelement 8 so ausgeführt ist, dass es nach der Verformung durch das Übertragungselement 5 den gesamten Raum zwischen dem Aggregat 2 und der Traktionsbatterie 3 einnimmt.

Im Sinne einer besseren Kraftübertragung kann es vorteilhaft sein, wenn das Übertragungselement 5 fest mit dem Kraftaufnahmeelement 8 verbunden ist. Im vorliegenden Fall ist das Übertragungselement 5 einteilig mit dem Kraftaufnahmeelement 8 verbunden, was beispielsweise durch einen gemeinsamen Gießvorgang erreicht werden kann. Es wäre jedoch auch möglich, das Übertragungselement 5 mit dem Kraftaufnahmeelement 8 zu verschrauben, zu verschweißen oder auf andere geeignete Art und Weise zu verbinden. Das Kraftaufnahmeelement 8 kann beispielsweise auch durch Stranggießen hergestellt werden. Vorzugsweise bestehen sowohl das Übertragungselement 5 als auch das Kraftaufnahmeelement 8 aus einem geeigneten Aluminiumwerkstoff. Statt eines Aluminiumwerkstoffs kann auch ein anderes geeignetes Material mit einem duktilen Verhalten eingesetzt werden.

Um eine Betätigung des Übertragungselements 5 auch dann zu gewährleisten, wenn sich die Gelenkwelle 7 in der mit "z" bezeichneten Richtung an einer anderen als der dargestellten Position befindet, was beispielsweise aufgrund unterschiedlicher Federungszustände des Kraftfahrzeugs vorkommen kann, weist das Übertragungselement 5 einen Vorsprung 5a auf, der sich in der vertikalen Richtung z erstreckt.

Das Übertragungselement 5 wird also durch eine durch den Crash verursachte Verschiebung der Gelenkwelle 7 betätigt. Durch die in den Figuren nicht dargestellten Räder, die durch die Gelenkwelle 7 angetrieben werden, und aufgrund der großen Dimensionierung der Gelenkwelle 7 und ihrer in Fahrtrichtung x relativ weit außen liegenden Position, wird die Gelenkwelle 7 im Crashfall als eines der ersten Fahrwerksteile mit Kraft beaufschlagt und somit bewegt. Während der hintere Bereich des Kraftfahrzeugs deformiert wird, resultiert das Anschieben des Rads in einer sofortigen Bewegung der Gelenkwelle 7. Hierbei ist außerdem zu beachten, dass das Rad aufgrund seines großen Durchmessers bei einem Aufprall eine hohe Beschleunigung erfährt, was zu der frühen Beaufschlagung der Gelenkwelle 7 führt. Diese durch den Crash induzierte Bewegung der Gelenkwelle 7 wird bei der Ausführungsform der Vorrichtung 1 gemäß der Figuren 1 bis 6 ausgenutzt, um über das Übertragungselement 5 das Kraftaufnahmeelement 8 wie oben beschrieben derart zu verformen, dass sich der Querschnitt desselben über seine Erstreckungsrichtung wesentlich ändert.

Um eine zuverlässige Beaufschlagung des Übertragungselements 5 durch die Gelenkwelle 7 zu erreichen, ist das Übertragungselement 5 relativ nahe an dem normalen Bewegungsbereich der Gelenkwelle 7 angeordnet. Durch die feste Anbindung des Übertragungselements 5 über die Drehachse 6 an dem Achsträger 4 wird die auf das Übertragungselement 5 einwirkende Bewegung der Gelenkwelle 7 in Fahrtrichtung x in eine Schwenk- bzw. Rotationsbewegung des Übertragungselements 5 um die in vertikaler Richtung verlaufende Drehachse 6 umgewandelt. Dadurch wirkt das Übertragungselement 5 an seinem der Gelenkwelle 7 abgewandten Ende auf das Kraftaufnahmeelement 8 ein und verformt dasselbe wie oben beschrieben.

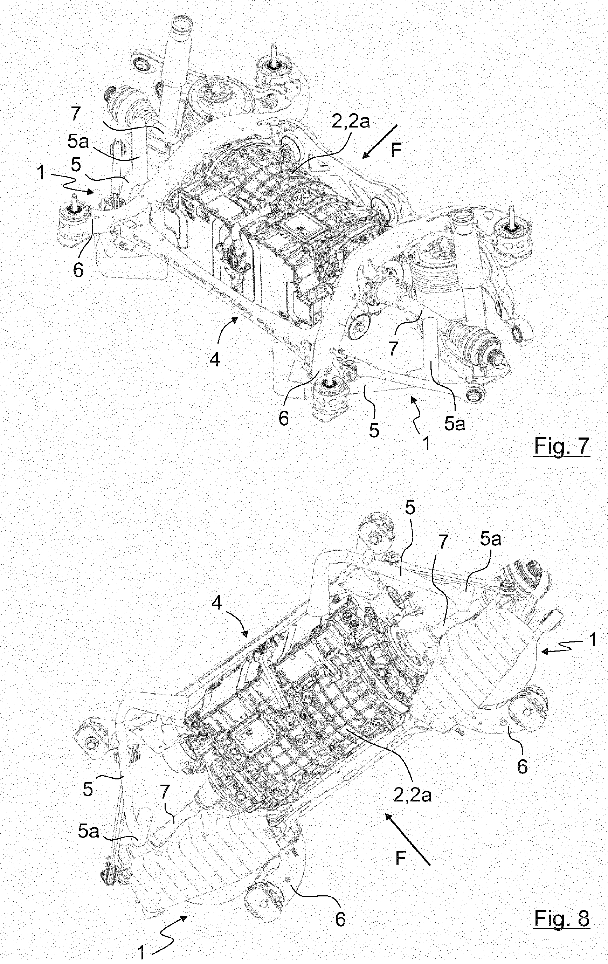

Die Figuren 7 und 8 zeigen eine alternative Ausführungsform der Vorrichtung 1. Hierbei ist das Übertragungselement 5 so angeordnet, dass es bei seiner Rotation um die Drehachse 6 entgegen der im Crashfall auf das Aggregat 2, im vorliegenden Fall also den Elektromotor 2a, wirkenden Kraft F wirkt. Es wird bei dieser Ausführungsform also auf das Kraftaufnahmeelement 8 verzichtet und die beiden Übertragungselemente 5 bringen durch ihre Rotation um die Drehachse 6 einen der durch den Crash hervorgerufenen Bewegung des Aggregats 2 entgegengesetzten Impuls auf, so dass die Bewegung des Aggregats 2 gehemmt wird. Im vorliegenden Fall sind an den dem Aggregat 2 zugewandten Enden der Übertragungselemente 5 jeweilige Verdickungen vorgesehen, welche die Stabilität der Übertragungselement 5 erhöhen. Die Beaufschlagung des Übertragungselements 5 durch die Gelenkwelle 7 ist jedoch wie oben beschrieben.

## Patentansprüche

1. Vorrichtung (1) zur Übertragung von Kräften im Crashfall eines Kraftfahrzeugs, mit einem Übertragungselement (5),
**dadurch gekennzeichnet, dass**
das Übertragungselement (5) drehbar gelagert und so gegenüber einer Gelenkwelle (7) angeordnet ist, dass es im Crashfall von der Gelenkwelle (7) beaufschlagt und rotiert wird, und dass es bei seiner Rotation eine durch den Crash hervorgerufene Bewegung eines Aggregats (2) des Kraftfahrzeugs zumindest mittelbar hemmt, wobei das Übertragungselement (5) so angeordnet ist, dass es auf ein Kraftaufnahmeelement (8) wirkt, das die Bewegung des Aggregats (2) hemmt.

2. Vorrichtung nach Anspruch 1,
**dadurch gekennzeichnet, dass**
das Kraftaufnahmeelement (8) so ausgebildet ist, dass es durch Einwirken des Übertragungselements (5) seine Erstreckung in Richtung des Aggregats (2) erhöht.

3. Vorrichtung nach Anspruch 1 oder 2,
**dadurch gekennzeichnet, dass**
das Übertragungselement (5) fest mit dem Kraftaufnahmeelement (8) verbunden ist.

4. Vorrichtung (1) zur Übertragung von Kräften im Crashfall eines Kraftfahrzeugs, mit einem Übertragungselement (5),
**dadurch gekennzeichnet, dass**
das Übertragungselement (5) drehbar gelagert und so gegenüber einer Gelenkwelle (7) angeordnet ist, dass es im Crashfall von der Gelenkwelle (7) beaufschlagt und rotiert wird, und dass es bei seiner Rotation eine durch den Crash hervorgerufene Bewegung eines Aggregats (2) des Kraftfahrzeugs zumindest mittelbar hemmt, wobei das Übertragungselement (5) so angeordnet ist, dass es bei seiner Rotation entgegen einer im Crashfall auf das Aggregat (2) wirkenden Kraft wirkt.

5. Vorrichtung nach einem der Ansprüche 1 bis 4,
**dadurch gekennzeichnet, dass**
das Übertragungselement (5) drehbar an einem Achsträger (4) gelagert ist.

6. Vorrichtung nach einem der Ansprüche 1 bis 5,
**dadurch gekennzeichnet, dass**
das Übertragungselement (5) einen in vertikaler Richtung (z) verlaufenden Vorsprung (5a) aufweist.

7. Vorrichtung nach einem der Ansprüche 1 bis 6,
**dadurch gekennzeichnet, dass**
das Aggregat (2) ein Elektromotor (2a) ist.

8. Kraftfahrzeug mit einer jeweiligen, auf beiden Seiten angeordneten Vorrichtung nach einem der Ansprüche 1 bis 7.

## Claims

1. Device (1) for the transmission of forces in the event of a crash of a motor vehicle, having a transmission element (5), **characterised in that** the transmission element (5) is rotatably mounted and arranged relative to an articulated shaft (7) such that, in the event of a crash, it is acted upon by the articulated shaft (7) and rotated, and that, in its rotation, a movement of an assembly (2) of the motor vehicle caused by the crash is at least indirectly inhibited, wherein the transmission element (5) is arranged such that it acts on a force absorbing element (8), which inhibits the movement of the assembly (2).

2. Device according to claim 1, **characterised in that** the force absorbing element (8) is designed such that it increases its extent in the direction of the assembly (2) by the action of the transmission element (5).

3. Device according to claim 1 or 2, **characterised in that** the transmission element (5) is fixedly connected to the force absorbing element (8).

4. Device (1) for the transmission of forces in the event of a crash of a motor vehicle, having a transmission element (5), **characterised in that** the transmission element (5) is rotatably mounted and arranged relative to an articulated shaft (7) such that, in the event of a crash, it is acted upon by the articulated shaft (7) and rotated, and that, in its rotation, a movement of an assembly (2) of the motor vehicle caused by the crash is at least indirectly inhibited, wherein the transmission element (5) is arranged such that, in its rotation, it acts counter to a force acting on the assembly (2) in the event of a crash.

5. Device according to any of claims 1 to 4, **characterised in that** the transmission element (5) is rotatably mounted on an axle support (4).

6. Device according to any of claims 1 to 5, **characterised in that** the transmission element (5) has a projection (5a) extending in a vertical direction (z).

7. Device according to any of claims 1 to 6, **characterised in that** the assembly (2) is an electric motor (2a).

8. Motor vehicle with a respective device arranged on both sides according to any of claims 1 to 7.

## Revendications

1. Dispositif (1) de transmission de forces lors de la collision d'un véhicule automobile, doté d'un élément de transmission (5)
**caractérisé en ce que**
l'élément de transmission (5) est monté de façon à pouvoir tourner et est agencé par rapport à un arbre de transmission (7) de telle sorte qu'en cas de collision, il est sollicité par l'arbre de transmission (7) et tourne, et **en ce que**, lors de sa rotation, un mouvement d'un groupe moteur (2) d'un véhicule entraîné par la collision est au moins indirectement empêché, dans lequel l'élément de transmission (5) est agencé de telle sorte qu'il agit sur un élément de réception de force (8) qui empêche le mouvement du bloc moteur (2).

2. Dispositif selon la revendication 1,
**caractérisé en ce que**
l'élément de réception de force (8) est conçu de telle sorte que sous l'effet de l'élément de transmission (5), il augmente son étendue en direction du bloc moteur (2).

3. Dispositif selon la revendication 1 ou 2,
**caractérisé en ce que**
l'élément de transmission (5) est relié fixement à l'élément de réception de force (8).

4. Dispositif (1) de transmission de forces lors de la collision d'un véhicule automobile, doté d'un élément de transmission (5)
**caractérisé en ce que**
l'élément de transmission (5) est monté de façon à pouvoir tourner et est agencé par rapport à un arbre de transmission (7) de telle sorte qu'en cas de collision, il est sollicité par l'arbre de transmission (7) et tourne, et **en ce que**, lors de sa rotation, un mouvement d'un groupe moteur (2) d'un véhicule entraîné par la collision est au moins indirectement empêché, dans lequel l'élément de transmission (5) est agencé de telle sorte que lors de sa rotation, il agit à l'encontre d'une force agissant sur le bloc moteur (2) lors de la collision.

5. Dispositif selon l'une quelconque des revendications 1 à 4,
**caractérisé en ce que**
l'élément de transmission (5) est monté à un support d'essieu (4) de façon à pouvoir tourner.

6. Dispositif selon l'une quelconque des revendications 1 à 5,
**caractérisé en ce que**
l'élément de transmission (5) présente une proéminence (5a) évoluant en direction verticale (z).

7. Dispositif selon l'une quelconque des revendications 1 à 6,
**caractérisé en ce que**
le groupe moteur (2) est un moteur électrique (2a).

8. Véhicule comportant un dispositif selon l'une quelconque des revendications 1 à 7 agencé respectivement des deux côtés.
